## Europäisches Patentamt

## European Patent Office

## Office européen des brevets

(19)

(11) Veröffentlichungsnummer: **0 046 882**
**B1**

(12) **EUROPÄISCHE PATENTSCHRIFT**

(45) Veröffentlichungstag der Patentschrift:
13.02.85

(21) Anmeldenummer: 81105931.0

(22) Anmeldetag: 28.07.81

(51) Int. Cl.⁴: **B 60 N 1/06, F 16 H 55/16**

(54) Drehgelenk, insbesondere für Sitze mit verstellbarer Rückenlehne.

(30) Priorität: 28.08.80 DE 3032374

(43) Veröffentlichungstag der Anmeldung:
10.03.82 Patentblatt 82/10

(45) Bekanntmachung des Hinweises auf die Patenterteilung:
13.02.85 Patentblatt 85/7

(84) Benannte Vertragsstaaten:
FR GB IT

(56) Entgegenhaltungen:
DE - A - 1 750 089
DE - B - 1 297 496
DE - C - 834 799
GB - A - 1 011 626
US - A - 2 720 119
US - A - 3 808 906

(73) Patentinhaber: KEIPER RECARO GmbH & Co.,
Büchelstrasse 54-58, D-5630 Remscheid 14 (DE)

(72) Erfinder: Pelz, Herbert, Im Rosenhof 20,
D-5630 Remscheid (DE)

(74) Vertreter: Buse, Karl Georg, Dipl.-Phys. et al,
Patentanwälte Dipl.-Phys. Buse Dipl.-Phys. Mentzel
Dipl.-Ing. Ludewig Unterdörnen 114,
D-5600 Wuppertal 2 (DE)

BUNDESDRUCKEREI BERLIN

## Beschreibung

Die Erfindung betrifft ein Drehgelenk, insbesondere für Sitze mit verstellbarer Rückenlehne, bei denen zwei gegeneinander bewegbare Gelenkteile über eine Schwenkachse miteinander verbunden sind, wobei eine die Lage der beiden Gelenkteile zueinander bestimmende, als Getriebe mit einem Innenzahnrad und mit einem damit kämmenden Stirnzahnrad gebildete Ver- und Feststelleinrichtung vorgesehen ist, die einen auf der Schwenkachse angeordneten drehbaren Exzenter aufweist.

Bei einem aus der DE-PS 1 297 496 bekannten Drehgelenk der vorgenannten Art ist aus Fig. 4 und dem zugehörigen Beschreibungsteil ein Gelenkbeschlag ersichtlich, bei dem der mit dem Sitzteil verbundene Gelenkteil seinerseits drehfest mit einem Stirnzahnrad verbunden ist, welches sich auf dem Exzenterabschnitt der Schwenkachse drehgelenkig abstützt. Der mit der Rückenlehne verbundene Gelenkteil ist drehfest mit einem Innenzahnrad verbunden, welches mit dem Stirnzahnrad in Eingriff ist und sich über eine Scheibe auf einem zentrischen Abschnitt der Schwenkachse drehgelenkig abstützt. Dabei ist zwischen den zentrischen Abschnitt und die das Innenzahnrad tragende Scheibe ein Ringkörper aus elastischem Werkstoff geschaltet. Dieser elastische Ringkörper dient dem Toleranzausgleich, da durch mehr oder weniger starkes Zusammendrücken des Ringkörpers etwa auftretende Toleranzen ausgeglichen werden können. Obschon sich mit dem elastischen Ringkörper Toleranzen der Verzahnung sowie der Schwenkachse und deren Lagerungen ausgleichen lassen, so kann doch die Geräuschdämpfung insbesondere im Verzahnungsbereich nicht voll befriedigen, weil trotz elastischer Verspannung von Stirnzahnrad und Innenzahnrad das metallische Abwälzen der Verzahnungen an ihrer Eingriffsstelle nicht gedämpft werden kann.

Auch die darüber hinaus bekanntgewordenen Maßnahmen des Radialspielausgleiches, wie beispielsweise der verschiebbaren Anordnung des Exzenters auf der Schwenkachse mit zwischengeschaltetem Federpuffer, konnten in dieser Hinsicht nicht voll befriedigen.

Die Aufgabe der vorliegenden Erfindung besteht darin, ein Drehgelenk der vorgenannten Art zu schaffen, bei dem einerseits der Vorteil eines Toleranzausgleiches beibehalten wird und bei dem andererseits die Geräuschbildung insbesondere im Verzahnungsbereich eliminiert ist.

Diese Aufgabe ist erfindungsgemäß dadurch gelöst, daß im Zahngrund wenigstens eines Zahnrades elastische Pufferstücke angeordnet sind, die abstandsweise einstückig über Stege mit einem Ring verbunden sind, der von einer im Abstand zum Fußkreis des Zahnrades an dessen Stirnseite angeordneten Ringnut aufgenommen ist, die ausgehend von ihrem Grund die Stege aufnehmende Verbindungsdurchbrüche zum Zahngrund jeder Zahnlücke aufweist. Da der Zahnkopf eine geringere Stärke aufweist als der Grund der Zahnlücke, kann das im Zahngrund befindliche Puffermaterial zur Seite hin zwischen die Zahnflanken ausweichen, wenn der Zahnkopf des Gegenrades an der Eingriffsstelle das Pufferstück zusammendrückt. Durch die Elastizität des Pufferstückes wird einerseits das Lagerspiel der Schwenkachse eliminiert, und andererseits treffen die Zahnflanken nicht direkt schlagartig aufeinander, sondern das Pufferstück wirkt auch auf die Relativbewegung der Zahnflanken dämpfend ein. Dieser Effekt kann noch vergrößert werden, wenn sowohl in den Zahngrund des Stirnrades als auch in den Zahngrund des Innenzahnrades elastische Pufferstücke eingesetzt sind. Diese aus einem elastisch verformbaren Stoff bestehenden Pufferstücke können beispielsweise aus einem Elastomer bestehen. Dabei kann es auch zweckmäßig sein, das Spiel zwischen dem Zahnkopf und dem Zahnfuß des Gegenrades größer als üblich zu gestalten, um einen ausreichenden Aufnahmeraum für die elastischen Pufferstücke zu schaffen. Durch die Verwendung solcher elastischer Pufferstücke ergibt sich ein gleichmäßiger und weicher Lauf der Zahnräder, und es ist kein Rattern und kein Springen der Verzahnung bemerkbar. Darüber hinaus ergeben sich fertigungstechnische Vorteile, da sowohl für die Herstellung der Verzahnungsteile als auch des Exzenterbolzens ein gröberes Toleranzfeld verwendet werden kann. Außerdem lassen sich die Pufferstücke in einem einfachen Montagevorgang leicht in den Zahngrund einer Verzahnung einsetzen. Aus der DE-PS 834 799 ist es zwar bei Zahnradantrieben für beispielsweise den Nockenwellenantrieb von Motoren bekannt, im Zahngrund wenigstens eines Zahnrades elastische Pufferstücke anzuordnen, die gemäß den Abb. 4 und 5 und dem zugehörigen Text der vorbekannten DE-PS 834 799 an einem Randbereich der Zähne eines Zahnrades in dessen Zahngrund als Einzelstücke eingesetzt und dort lösbar oder unlösbar befestigt sein können. Das Gegenrad ist am gleichen Randbereich an seinen Zahnköpfen abgedreht und drückt sich mit diesen Zahnköpfen auf den Pufferstücken des einen Zahnrades ab. Diese Lösung ist insofern nachteilig, als daß die Montage der Pufferstücke langwierig und schwierig ist, und die dauerhafte Halterung der einzelnen Pufferstücke in den Zahnstücken zweifelhaft ist. Nach einer weiteren Lösung der DE-PS 834 799 ist ein Zahnrad mit einer von seiner Verzahnungsseite her radial eingetieften Ringnut versehen, in die ein elastischer Ring eingesetzt ist, dessen in die Zahnlücke vorragende Bereiche Pufferstücke bilden, die demnach Teilbereiche eines homogenen Ringes darstellen. Das Einsetzen eines derartigen Ringes in die Ringnut ist insofern problematisch, als daß der Ring insgesamt aufgeweitet werden muß, um in diese Ringnut eingesetzt werden zu können. Dabei ist allenfalls hochelastischer Werkstoff zu verwenden, der jedoch nicht genügend große, aus seiner Elastizität resultierende Kräfte zur Eliminierung von Zahn- bzw. Radialspiel aufbringen kann. Im Gegensatz dazu sind bei der erfindungsgemäßen Lösung einzelne, der Anzahl der Zahnlücken entsprechende Pufferstücke aus einem elastischen Werkstoff einstückig mit einem Ring verbunden, der sehr leicht in die entsprechende Ringausdehnung eingesetzt werden kann. Dabei ist die Ringnut vorzugsweise V-förmig gestaltet, wobei die Verbindungsbrüche zum Zahngrund hin geneigt etwa die gesamte Zahnbreite erfassend verlaufen.

Eine im Hinblick insbesondere auf eine Massenproduktion günstige Fertigung der Gelenkteile wird vorteilhaft erzielt, indem die Ringnut, die Verbindungsdurchbrüche und die Verzahnung gemeinsam in einem Schneidprägevorgang gebildet sind.

Die Erfindung ist in Ausführungsbeispielen in der Zeichnung dargestellt und wird nachfolgend näher erläutert. Es zeigt

Fig. 1 das erfindungsgemäße Drehgelenk in einer den Zahneingriff im Schnitt zeigenden aufgebrochenen Seitenansicht bei abgenommener Verstellhandhabe,

Fig. 2 das Drehgelenk in einem Längsschnitt nach der Linie II-II von Fig. 1,

Fig. 3 den in Fig. 1 im Kreis III dargestellten Zahneingriff in vergrößertem Maßstab,

Fig. 4 den Verzahnungsbereich des Innenzahnrades vorbereitet zur Aufnahme eines die Pufferstücke aufweisenden elastischen Ringes in einem Längsschnitt,

Fig. 5 das aus Fig. 4 ersichtliche Innenzahnrad in einem Ansichtsausschnitt,

Fig. 6 den Querschnitt des die Pufferstücke aufweisenden elastischen Ringes,

Fig. 7 einen Abschnitt des elastischen Ringes in einer Ansicht,

Fig. 8 eine alternative Ausführungsform des die Innenverzahnung aufweisenden Gelenkteiles in einem der Fig. 4 entsprechenden Längsschnitt.

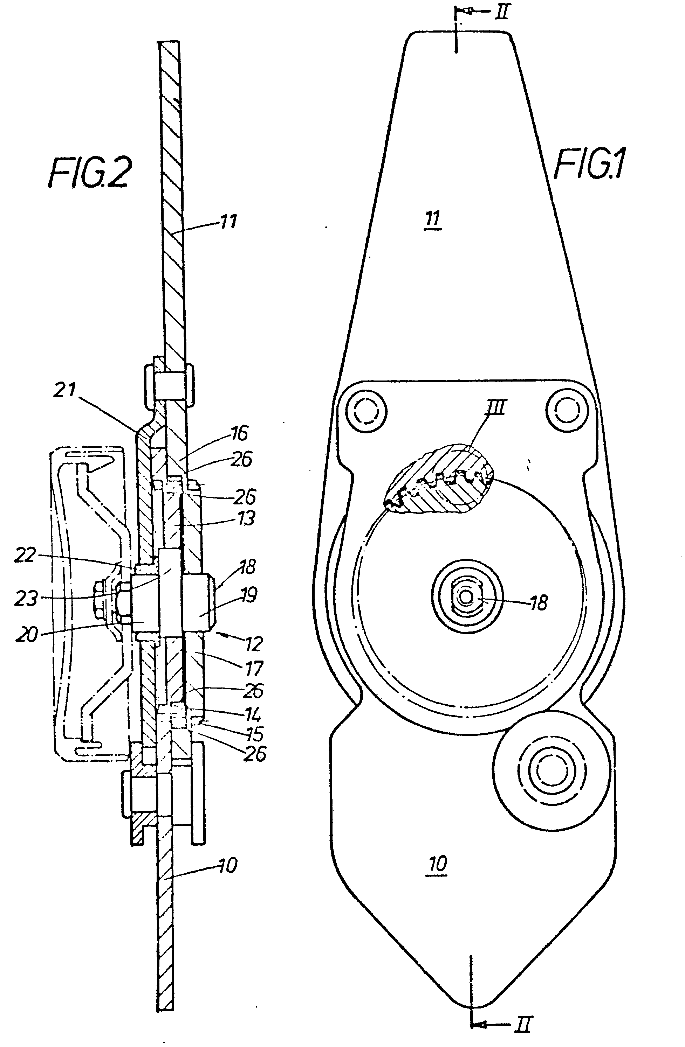

Das aus den Fig. 1 und 2 ersichtliche Drehgelenk umfaßt im wesentlichen einen an dem Sitzteil zu befestigenden Gelenkteil 10 und einen an der Rückenlehne zu befestigenden Gelenkteil 11 sowie eine Stelleinrichtung 12. Der Gelenkteil 10 weist ein beispielsweise durch Ausprägen gebildetes Stirnzahnrad 13 mit einer Außenverzahnung 14 auf, welche mit der Innenverzahnung 15 eines beispielsweise ebenfalls durch Ausprägen gebildeten Innenzahnrades 16 des Gelenkteiles 11 kämmt. Der Durchmesser des Kopfkreises der Außenverzahnung 14 ist um wenigstens eine Zahnhöhe kleiner als der Durchmesser des Fußkreises der Innenverzahnung 15. Demgemäß weisen die Verzahnungen 14 und 15 sich um wenigstens einen Zahn unterscheidende Zähnezahlen auf, wobei die Zähnezahl der Innenverzahnung 15 größer ist als die Zähnezahl der Außenverzahnung 14. Die Anordnung ist derart gewählt, daß sich die Innenverzahnung 15 des Gelenkteiles 11 auf der Außenverzahnung 14 am Stirnzahnrad 13 des Gelenkteiles 10 abwälzen kann.

Die durch Bildung der Innenverzahnung 15 ausgeprägte Scheibe 17 des Gelenkteiles 11 ist auf einem Schwenkachsenabschnitt 19 der Schwenkachse 18 gelagert, welche konzentrisch zum Schwenkachsenabschnitt 19 einen weiteren Schwenkachsenabschnitt 20 aufweist. Dieser Schwenkachsenabschnitt 20 stützt sich in einem mit dem Gelenkteil 11 beispielsweise durch Vernieten fest verbundenen und den Gelenkteil 10 im Bereich seines Stirnzahnrades 13 übergreifenden Lagerschild 21 über eine darin beispielsweise eingepreßte Lagerbuchse 22 ab. Zwischen den Schwenkachsenabschnitten 19 und 20 ist ein Exzenterabschnitt 23 angeordnet, auf welchem das Stirnzahnrad 13 drehbar gelagert ist, wobei die Exzentrizität des Exzenterabschnittes 23 gegenüber dem Drehmittelpunkt der Schwenkachse 18 etwa der Differenz zwischen dem Radius des Fußkreises der Innenverzahnung 15 und dem Radius des Kopfkreises der Außenverzahnung 14 entspricht.

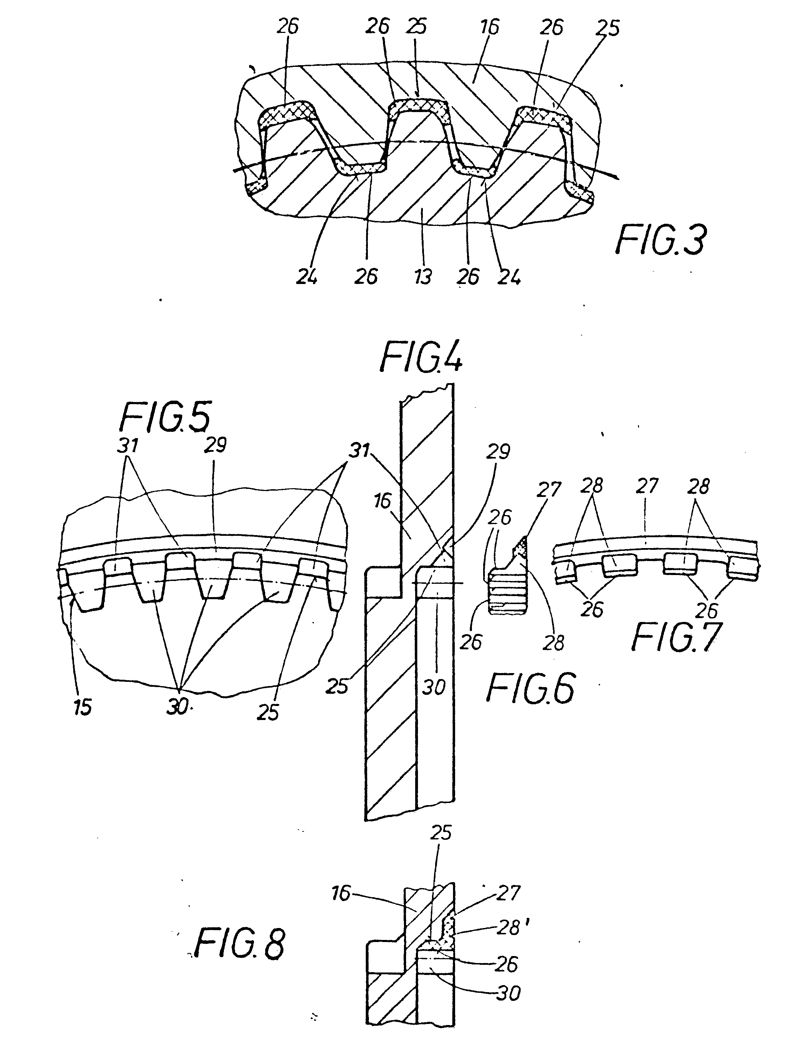

Wie insbesondere der Fig. 3 entnommen werden kann, befinden sich bei dem dargestellten Ausführungsbeispiel sowohl im Zahngrund 24 des Stirnzahnrades 13 als auch im Zahngrund 25 des Innenzahnrades 16 elastische Pufferstücke 26 aus einem elastomeren Werkstoff, wie beispielsweise Silikonkautschuk od. dgl. Diese elastomeren Werkstoffe lassen sich an den Zahngrund anspritzen und sind so bemessen, daß an den Eingriffsstellen die Pufferstücke 26 mit Wulsten zwischen die Zahnflanken vordringen.

Um die Pufferstücke 26 auf andere Weise als durch Einspritzen in jeder Zahnlücke am Zahngrund haltern zu können, sind, wie insbesondere aus den Fig. 6 und 7 ersichtlich ist, die Pufferstücke 26 an einen Ring 27 mit beispielsweise dreieckförmigem Querschnitt im Zahnteilungsabstand über Stege 28 angeformt. Dieser aus den Fig. 6 und 7 ersichtliche, die Pufferstücke 26 halternde Ring 27 ist geeignet, bei einem Innenzahnrad eingesetzt zu werden, weshalb die Pufferstücke 26 mit den Stegen 28 zum Mittelpunkt des Ringes 27 weisen. Es versteht sich, daß bei einem Ring zur Verwendung bei einer Außenverzahnung die Pufferstücke und die Stege 28 auf der Außenseite des Ringes vom Mittelpunkt wegweisend im Zahnteilungsabstand angeformt sind. Zur Aufnahme des die Pufferstücke 26 aufweisenden Ringes 27 ist im Abstand zum Fußkreis des Innenzahnrades 16 konzentrisch zu dessen Teilkreis eine Ringnut 29 angeordnet, die einen dem Ring 27 entsprechenden Querschnitt aufweist. Etwa vom Grund dieser Ringnut 29 ausgehend sind zwischen den Zähnen 30 der Innenverzahnung 15 Verbindungsdurchbrüche 31 über einen Teil der Zahnbreite reichend angeordnet, welche die den Ring 27 mit dem Pufferstücken 26 verbindenden Stege 28 aufnehmen. Dabei können die Verbindungsdurchbrüche 31, wie insbesondere aus Fig. 4 ersichtlich ist, zum Zahngrund 25 hin geneigt verlaufen und etwa die gesamte Zahnbreite erfassen. Alternativ zu den aus den Fig. 4 bis 7 ersichtlichen Ausführungsbeispielen lassen sich die Ringform und die Aufnahmeräume für den Ring, dessen Verbindungsstege und gegebenenfalls auch die daran angeformten Pufferstücke variieren. Eine derartig abgeänderte Ausführungsform ist aus Fig. 8 ersichtlich, bei der die Form des Ringes 27 und der Pufferstücke 26 beibehalten wurde, wobei jedoch der Steg 28' in radialer Richtung senkrecht zum Zahngrund 25 verläuft.

Bei den aus den Fig. 4 bis 8 ersichtlichen Ausführungsbeispielen handelt es sich um die Ausstattung eines Innenzahnrades mit Pufferstükken, die einstückig mit einem den Zahngrund in äquidistantem Abstand umfassenden Ring verbunden sind. Wie bereits oben erwähnt, ist eine derartige Ausstattung des Zahngrundes mit einstückig mit einem Ring verbundenen Pufferstücken auch bei dem Stirnzahnrad 13 möglich. In diesem Fall ist die Ringnut zur Aufnahme des die Pufferstücke aufweisenden Ringes in radialer Richtung unterhalb des Zahngrundes im Stirnzahnrad angeordnet, wobei zwischen der Ringnut und dem Zahngrund entsprechende Verbindungsdurchbrüche 31 angeformt sind.

Es ist denkbar, die Aufnahmeräume für Stege und Ring in spanabhebender Bearbeitung herzustellen. Bei derartigen Massenartikeln jedoch, wie sie Gelenkbeschläge für Kraftfahrzeuge darstellen, ist es vorteilhaft, wenn die Ringnut, die Verbindungsdurchbrüche und die Verzahnung gemeinsam in einem Schneidprägevorgang hergestellt sind.

Es ist beispielsweise denkbar, die Pufferstücke außer in Getrieben von Drehgelenken für die Sitzverstellung auch in Vorrichtungen einzusetzen, die zur Geräuschbildung neigen, wie beispielsweise Fensterheber, Sitzhöhenversteller oder verstellbare Kopfstützen.

**Patentansprüche**

1. Drehgelenk, insbesondere für Sitze mit verstellbarer Rückenlehne, bei denen zwei gegeneinander bewegbare Gelenkteile (10, 11) über eine Schwenkachse (18) miteinander verbunden sind, wobei eine die Lage der beiden Gelenkteile zueinander bestimmende, als Getriebe mit einem Innenzahnrad (16) und einem damit kämmenden Stirnzahnrad (13) ausgebildete Ver- und Feststelleinrichtung vorgesehen ist, die einen auf der Schwenkachse angeordneten, drehbaren Exzenter (23) aufweist, dadurch gekennzeichnet, daß im Zahngrund (24, 25) wenigstens eines Zahnrades (13, 16) elastische Pufferstücke (26) angeordnet sind, die abstandweise über Stege (28, 28') mit einem Ring (27) verbunden sind, der von einer im Abstand zum Fußkreis des Zahnrades (13, 16) an dessen Stirnseite angeordneten Ringnut (29) aufgenommen ist, die ausgehend von ihrem Grund die Stege (28, 28') aufnehmende Verbindungsdurchbrüche (31) zum Zahngrund (25) jeder Zahnlücke aufweist.

2. Drehgelenk nach Anspruch 1, dadurch gekennzeichnet, daß die Ringnut (29) V-förmig gestaltet ist und die Verbindungsdurchbrüche (28) zum Zahngrund (25) hin geneigt etwa die gesamte Zahnbreite erfassend verlaufen.

3. Drehgelenk nach Anspruch 1 oder 2, dadurch gekennzeichnet, daß die Ringnut (29) die Verbindungsdurchbrüche (31) und die Verzahnung (14, 15) gemeinsam in einem Schneidprägevorgang gebildet sind.

**Claims**

1. A hinge, in particular for seats with adjustable seat back in which two relatively movable hinge elements (10, 11) are connected with each other through a pivot shaft (18), wherein there is provided an adjusting and locking arrangement defining the relative position of the two hinge elements and designed as a gearing having an inner gearwheel (16) and a spur gearwheel (13) in mating relation therewith, said arrangement having a rotating eccentric (23) mounted on the pivot shaft, characterized in that on the wheel bottom (24, 25) of at least one gearwheel (13, 16) there are provided elastic cushions (26) which are connected one piece each and in spaced relationship via webs (28, 28') to a ring (27) being accommodated in an annular groove (29) provided at a spaced distance from the root circle of the gearwheel (13, 16) at the front face thereof, said groove having connecting openings (31) starting from its bottom, accommodating the webs (28, 28') and extending to the wheel bottom (25) of each wheel gap.

2. A hinge as claimed in the claim 1, characterized in that the annular groove (29) is V-shaped and the connecting openings (28) are inclined towards the wheel bottom (25) covering almost the total width of the gearwheel.

3. A hinge as claimed in the claim 1 or 2, characterized in that the annular groove (29), the connecting openings (31) and the gearing (14, 15) are made together in one cut-and-stamp operation.

**Revendications**

1. Articulation tournante en particulier pour siège à dossier réglable, dans laquelle deux éléments articulés (10, 11) mobiles l'un par rapport à l'autre sont reliés l'un à l'autre grâce à un axe de basculement (18), munie d'un dispositif de réglage et de fixation en forme d'engrenage constitué par une couronne ou roue à denture intérieure (16) engrenant avec une roue à denture frontale (13), lequel dispositif présente un excentrique (23) monté à rotation sur l'axe de basculement, caractérisée par le fait qu'au fond des dentures (24, 25) d'au moins une roue dentée (13, 16) sont disposées des pièces-tampons élastiques (26) qui sont reliés à un anneau (27) par des nervures (28, 28') les maintenant à distance, le tout formant bloc, l'anneau étant dans une rainure annulaire (29) disposée sur la face latérale de la roue dentée (13, 16) à une certaine distance du cercle de pied des dents, et présentant à partir de sa base des canaux de liaison (31) recevant les nervures (28, 28') pour le fond de denture (25) de chaque entre-dent.

2. Articulation tournante selon la revendication 1, caractérisée par le fait que la rainure annulaire (29) est en forme de V et que les canaux de liaison (28) inclinés par rapport au fond de denture (25) se développent approximativement selon la totalité de la largeur de denture.

3. Articulation tournante selon la revendication 1 ou 2, caractérisée par le fait que la rainure annulaire (29), les canaux de communication (31) et la denture (14, 15) sont formés simultanéiment par un processus d'estampage-découpage.

FIG.2

FIG.1

0 046 882

FIG.3

FIG.4

FIG.5

FIG.6

FIG.7

FIG.8

9